# FASCICULE DE BREVET EUROPEEN

(11) **EP 3 479 689 B1**
(45) Date de publication et mention de la délivrance du brevet: **16.09.2020**
(21) Numéro de dépôt: 18196192.1
(22) Date de dépôt: 24.09.2018
(51) Int. Cl.: A01K 7/00, A01K 7/02

(54) **INSTALLATION À ABREUVOIR POUR ANIMAUX**
ANLAGE MIT TRÄNKE FÜR TIERE
ANIMAL DRINKING TROUGH SYSTEM

(30) Priorité: 03.10.2017 FR 1759216; 16.11.2017 FR 1760803
(43) Date de publication de la demande: 08.05.2019
(73) Titulaire: La Buvette, 08090 Tournes (FR)
(72) Inventeur: BOUSQUET, Jean-Philippe, 51480 Belval-sous-Châtillon (FR)
(74) Mandataire: Cabinet Bleger-Rhein-Poupon

(56) Documents cités:
- CA-A1- 2 519 543
- FR-A1- 2 630 883

## Description

La présente invention concerne une installation à abreuvoir pour animaux et a également trait à un procédé de fixation de l'abreuvoir sur une buse en béton ou en matériau synthétique.

Elle concerne donc le domaine des dispositifs pour abreuvement d'animaux et plus particulièrement les abreuvoirs que l'on solidarise sur l'extrémité supérieure d'une buse cylindrique elle-même fixée verticalement dans le sol, une telle buse accueillant, intérieurement, notamment les moyens de raccordement de l'abreuvoir à un réseau d'alimentation en eau. L'installation comporte en somme principalement une buse implantée dans le sol et un abreuvoir fixé au sommet de ladite buse.

Il est actuellement largement connu d'utiliser des abreuvoirs surmontant l'extrémité de telles buses, que celles-ci soient en matériau synthétique ou en béton, buses pouvant d'ailleurs adopter différents diamètres notamment selon leur matériau constitutif. Les buses sont implantées dans le sol, en extérieur sur les terrains de pâturage ou à l'intérieur des bâtiments d'élevage. La partie enfoncée dans le sol donne accès à un réseau d'alimentation en eau auquel est susceptible d'être raccordé l'abreuvoir fixé à l'extrémité supérieure de la buse par l'intermédiaire de moyens de raccordement spécifiques. Selon le cas, les installations sont également raccordées au réseau électrique.

CA 2 519 543 A1 divulgue une installation à abreuvoir selon le préambule de la revendication 1.

Des modes de fixation de l'abreuvoir à la buse à l'extérieur de celle-ci existaient mais ont été abandonnés il y a des années du fait de plusieurs inconvénients majeurs liés à ce type de solutions : l'adaptabilité aux diamètres très différents des buses en béton sur le marché était difficile, et les animaux finissaient par démonter les fixations à force de se frotter aux abreuvoirs. Les solutions de solidarisation actuelles sont donc dans la plupart des cas intérieures.

De manière habituelle, la fixation de l'abreuvoir sur la buse s'effectue alors au moyen d'une bride de fixation adaptée consistant en une pièce indépendante rapportée sur l'extrémité supérieure de la buse, l'abreuvoir proprement dit étant fixé sur ladite bride.

En ce qui concerne le mode opératoire, l'opérateur positionne d'abord la bride au-dessus de la buse en vue d'une phase préliminaire de positionnement de la buse et de la bride. Cette dernière comporte des pattes de fixation destinées à s'étendre, selon le cas, intérieurement ou extérieurement dans ou autour de la buse, lesdites pattes comportant des ouvertures de passage de vis de fixation. L'opérateur repère le positionnement correct de ces ouvertures sur la buse avant de procéder au perçage traversant de cette dernière.

Une fois ce perçage effectué, il repositionne la bride sur la buse, met en place les vis de fixation traversant simultanément les pattes de fixation de la bride et la paroi de la buse, puis procède au serrage de ces vis de fixation à l'aide d'écrous généralement positionnés du côté intérieur de la buse.

Ensuite, après que le raccordement au réseau d'eau, voire au réseau électrique, de l'abreuvoir a été réalisé, celui-ci est positionné et fixé sur la bride.

On comprend aisément que cette bride de fixation, nécessaire pour rapporter et solidariser un abreuvoir au-dessus d'une telle buse, constitue une pièce additionnelle représentant un coût de fabrication non négligeable. Cela sans compter que l'opérateur doit s'astreindre à deux opérations de fixation et de vissage, l'une pour solidariser la bride sur la buse, l'autre pour rapporter l'abreuvoir sur la bride, ces opérations représentant un temps de pose non négligeable, avec le risque supplémentaire d'égarer les vis et autres écrous.

Il convient en outre de prendre en compte que, pour un même diamètre nominal extérieur, le diamètre interne d'une buse en matériau synthétique est souvent plus petit que le diamètre interne d'une buse en béton. Cela résulte d'une épaisseur de paroi qui est plus faible pour une buse en béton que si la buse est en matériau synthétique, pour d'évidentes raisons de tenue et de résistance mécanique. Le problème se pose de manière assez similaire pour le diamètre extérieur.

Dès lors, pour garantir un bon centrage de l'abreuvoir sur des buses de différents types, il est indispensable, pour le fabricant, de proposer au moins deux types de solutions : l'un plus adapté aux buses en matériau synthétique alors que l'autre est plus particulièrement dédié aux buses en béton. A cet effet, les fabricants doivent prévoir et mettre à disposition par exemple des cales de centrage adaptées, permettant d'adapter les abreuvoirs à tout type de buses, ou encore prévoir des organes déformables pour s'ajuster à la différence de dimension des configurations.

On a d'ores et déjà imaginé, par ailleurs, de pré-équiper la partie inférieure d'un abreuvoir d'une bride de positionnement prévue pour venir, selon le cas, s'emboîter dans ou sur une buse. La fixation est alors assurée, exclusivement, via des vis de fixation se prenant dans l'épaisseur du matériau de cette bride ou de la buse, selon la nature dudit matériau.

De fait, lorsque la buse est en matériau synthétique, elle est généralement conçue à double paroi et creuse à l'intérieur, et n'offre donc pas de prise suffisante à un filetage de vis.

Mais dans l'hypothèse d'une fixation à la bride, il convient de pré-équiper ladite bride de trous taraudés, ce qui pose le problème de la précision de perçage à réaliser au niveau de la buse pour garantir le bon positionnement de ces perçages aux endroits des trous taraudés dans la bride. De plus, dans ce cas, la bride doit nécessairement être conçue en un matériau métallique d'épaisseur convenable pour offrir une prise de fixation suffisante aux vis de fixation fixées depuis l'extérieur de la buse.

A noter, d'ailleurs, qu'étant exposées à la corrosion, ces brides sont, la plupart du temps, conçues en aluminium ou en fonte, ce qui ne fait qu'augmenter leur coût de fabrication.

En réalité, les solutions antérieures, pour toutes ces raisons et notamment du fait de l'existence de buses distinctes (fabriquées en des matériaux différents), nécessitent des composants et solutions spécifiques à chaque assemblage, complexifiant les opérations pour les monteurs, et conduisant trop souvent à des durées de montage loin d'être négligeables.

La solution selon l'invention remédie à cet état de la technique en proposant une configuration innovante qui s'affranchit des insuffisances présentées en simplifiant considérablement la structure des installations, avec pour corollaire immédiat un allégement substantiel des opérations de montage.

A ces effets, l'installation à abreuvoir de l'invention, comportant classiquement une buse implantée dans le sol et un abreuvoir fixé au sommet de la buse au moyen d'une bride de fixation est notamment telle que ladite bride est d'une seule pièce avec l'abreuvoir.

La pièce distincte que constituait la bride de fixation, qui nécessitait une double opération de solidarisation d'une part à l'abreuvoir et d'autre part à la buse, quelle qu'elle soit, disparaît. Sur un plan économique, le coût de fabrication d'une pièce unique, en quelque sorte universelle, s'avère bien plus favorable que le schéma précédant imposant la conception et la fabrication d'un abreuvoir et de composants de fixation spécifiques aux buses utilisées. La bride unique venue d'une seule pièce avec l'abreuvoir déplace dès lors le problème de l'adaptabilité à des buses différentes, notamment en béton ou en matériau synthétique, aux solutions de fixation utilisées.

La bride est par ailleurs insérable dans une ouverture supérieure de la buse.

Selon l'invention, l'installation comporte une pluralité de systèmes de fixation de la bride à la buse répartis sur leur périphérie, chaque système présentant des premiers moyens de fixation liés à la bride et des seconds moyens de fixation liés à la buse, lesdits moyens étant aptes à coopérer en vue de la fixation de l'une à l'autre, lesdits premiers moyens de fixation étant d'agencement réversible par rapport à une cloison périphérique de la bride insérée dans ladite ouverture et étant dimensionnés pour former, dans l'un de leur agencement par rapport à la cloison, entretoise entre la surface extérieure de ladite cloison et la surface intérieure de la paroi de l'ouverture de la buse.

En d'autres termes, les moyens de fixation eux-mêmes, sans modification de leur structure, peuvent être organisés spatialement de manière à réaliser l'adaptation aux types de buses précitées. Un unique ensemble abreuvoir/bride peut dès lors être fixé au sommet des différentes buses, la solidarisation résultant d'un agencement des moyens de fixation qui dépend de la buse considérée.

De préférence, les premiers moyens de fixation comportent un premier écrou coopérant avec des moyens de solidarisation réversible à la cloison de la bride et sont localisés au niveau d'un orifice pratiqué dans ladite cloison, ledit premier écrou servant à la fixation d'une vis filetée constituant les seconds moyens de fixation, traversant la paroi de la buse selon un conduit coaxial audit orifice de la cloison.

La fixation se fait donc par boulonnage et comporte une vis traversante, comme dans les dispositifs de l'art antérieur, et un écrou intérieur coopérant avec ladite vis, dont la position par rapport à la cloison de la bride est susceptible d'être modifiée pour adapter le mode de fixation à la buse.

Selon une configuration possible, les moyens de solidarisation réversibles comportent un second écrou, les premier et second écrous étant placés de part et d'autre de l'orifice pratiqué dans la cloison de la bride, le premier écrou comportant une base munie de griffes de fixation dans une face de la cloison de la bride et un filetage externe apte à un vissage dans le filetage interne du second écrou, lequel s'appuie en phase de serrage contre l'autre face de la cloison.

L'écrou prévu pour assurer la fixation, principale, en coopération avec la vis, est facile à fixer par enfoncement des griffes dans la face interne ou externe de la cloison périphérique de la bride, ce qui revient à orienter son corps fileté respectivement vers l'extérieur ou vers l'intérieur de ladite bride. Le second écrou, positionné de l'autre côté de la cloison, s'étend et dépasse donc dans une orientation d'allure radiale également vers l'intérieur ou vers l'extérieur de la bride.

De préférence, le second écrou comporte une embase et est positionné par rapport à la bride avec ladite embase en appui contre la face interne de la cloison lorsqu'il est à l'intérieur de la bride, ou contre ou au voisinage de la face intérieure de la buse lorsqu'il est à l'extérieur de la bride. En substance, l'embase repose contre la face interne de la cloison lorsque le second écrou est placé à l'intérieur de la bride, mais elle n'est pas en appui contre la face externe de la même cloison lorsque le second écrou est positionné à l'extérieur de la bride. L'embase est alors au contraire positionnée à distance de la cloison et peut lui faire pleinement jouer son rôle d'entretoise, en appui ou à tout le moins au voisinage de la face interne de la paroi de la buse.

Pour améliorer encore l'adaptabilité de l'ensemble, il est prévu selon l'invention que la cloison elle-même puisse être divisée en deux zones de fixation périphériques, une première zone de fixation proximale de l'abreuvoir et une seconde zone de fixation distale de l'abreuvoir, les systèmes de fixation de la bride à la buse étant placés exclusivement dans l'une des deux zones. En réalité, la fixation de la bride à la buse se fait à une hauteur différente de la bride, plus ou moins haut, selon le type de buse, par exemple pour répondre à des spécificités qui tiennent au matériau de la buse.

Plus précisément encore, les zones de fixations peuvent être en forme de bandes périphériques dans lesquelles les systèmes de fixation sont disposés périphériquement au même niveau, la seconde zone pouvant de plus être en retrait de la première dans une direction d'allure radiale. La différentiation des zones de fixation confère à l'invention un avantage technique en relation avec la nature des buses utilisées : avec une buse en béton, par exemple, il est nécessaire de placer les systèmes de fixation plus bas, donc dans la seconde zone, afin d'opérer plus bas également dans lesdites buses en béton lors de la fixation pour éviter de faire éclater le béton au niveau de la bordure supérieure de la buse.

Selon une possibilité, notamment liée à des impératifs de tenue et de résistance mécaniques, la cloison périphérique de la bride présente un profil cannelé et, dans ce cas, les systèmes de fixation s'appliquent sur les portions protubérantes entre les cannelures.

L'abreuvoir comporte d'ailleurs des repères répartis sur sa périphérie et situés au voisinage du bord supérieur de la buse lorsque la bride est insérée dans la buse, lesdits repères étant tracés au droit des milieux des portions protubérantes de la cloison de la bride de manière à repérer ces dernières même lorsque l'abreuvoir est enfiché via la bride dans l'ouverture supérieure de la buse, état dans lequel les cannelures sont invisibles.

L'invention concerne également un procédé de fixation d'un abreuvoir à une buse implantée au sol dans une installation dans laquelle l'abreuvoir est fixé à la buse au moyen d'une bride d'une seule pièce avec l'abreuvoir telle que décrite auparavant.

Selon la nature du matériau constituant la buse, l'épaisseur de la paroi périphérique de ladite buse change, comme on l'a mentionné auparavant, ce qui conduit à une différence de diamètre intérieur. L'abreuvoir étant d'un seul tenant avec une bride de configuration unique, le montage n'est pas le même selon le type de buse considéré. L'opérateur est donc conduit à adapter le montage à la buse existante, selon les modalités suivantes :
- Mise en correspondance des repères de l'abreuvoir avec des repères sur la face extérieure de la paroi de la buse en au moins une pluralité d'emplacements sélectionnés sur la périphérie de la buse ;
- Réalisation de perçages au niveau desdits emplacements sur la périphérie de la buse, comportant le perçage de la cloison de la bride ;
- Si les diamètres respectivement externe de la bride et interne de la buse présentent un différentiel supérieur à un seuil prédéterminé, mise en place des premier et second écrous selon un agencement formant entretoise entre la cloison et la buse ;

- Sinon, mise en place inversée desdits premier et second écrous sans agencement en entretoise ;
- Mise en place des vis dans les emplacements ayant fait l'objet d'un perçage ;
- Fixation de l'abreuvoir sur la buse au niveau de la bride par serrage des vis dans les écrous.

En fait, dans le cas d'une buse en polyéthylène, les opérations s'effectuent plus précisément de la manière suivante :
- Mise en correspondance des repères de l'abreuvoir avec les embouchures des conduits apparaissant sur la face extérieure de la paroi de la buse ;
- Réalisation de perçages de la cloison de la bride en utilisant les conduits comme canon de perçage aux emplacements sélectionnés ;
- Mise en place des premier et second écrous selon un agencement compact comportant le premier écrou orienté vers l'intérieur de la bride.

Les diamètres externe de la bride et interne de la buse sont dans ce cas, comme on le verra plus précisément notamment en référence aux figures, voisins et cet agencement des écrous est le seul possible.

Dans l'hypothèse d'une buse en béton, au contraire, ces diamètres sont sensiblement différents et, dans ce cas, les modalités suivantes d'assemblage sont à prévoir :
- Mise en correspondance des repères de l'abreuvoir avec des repères à tracer sur la face extérieure de la paroi de la buse aux emplacements sélectionnés, à une distance prédéterminée du bord supérieur de la buse ;
- Réalisation de perçages à ces emplacements de la paroi de la buse et, ensuite, de la cloison de la bride ;
- Mise en place des premier et second écrous selon un agencement en entretoise comportant le premier écrou orienté vers l'extérieur de la bride.

Cet agencement permet, comme cela sera plus apparent dans la suite, de mieux centrer la bride dans l'ouverture de la buse en béton malgré la différence de diamètre, et aussi d'utiliser les mêmes longueurs de vis pour le montage.

Pour permettre le montage des écrous, dont les diamètres sont évidemment supérieurs aux vis, les perçages de la cloison de la bride font ensuite en général l'objet d'un second perçage de diamètre supérieur, puis d'un ébavurage.

L'invention va à présent être décrite plus en détail, en référence aux figures annexées, qui représentent des exemples non limitatifs de mise en œuvre de l'invention, et pour lesquelles :
- La figure 1 est une vue en perspective d'une installation à abreuvoir selon l'invention ;
- La figure 2 montre une vue en coupe transversale d'une bride, les moyens de fixation étant montés pour coopérer avec une buse en polyéthylène ;
- La figure 3 représente une vue partielle en coupe transversale de ladite bride fixée à une buse en polyéthylène, à la manière « compacte » apparaissant en figure 2 ;
- La figure 4 est une vue partielle en coupe longitudinale d'un abreuvoir à bride d'un seul tenant selon l'invention fixé à une buse en polyéthylène ;
- La figure 5 montre une vue en coupe transversale d'une bride prévue pour coopérer avec une buse en béton, l'agencement des moyens de fixation étant prévu en conséquence ;
- La figure 6 représente une vue partielle en coupe transversale de la bride, avec les moyens de fixation agencés selon la figure précédente, fixée à une buse en béton ; et
- La figure 7 est une vue partielle en coupe longitudinale d'un abreuvoir à bride d'un seul tenant selon l'invention fixé à une buse en béton.

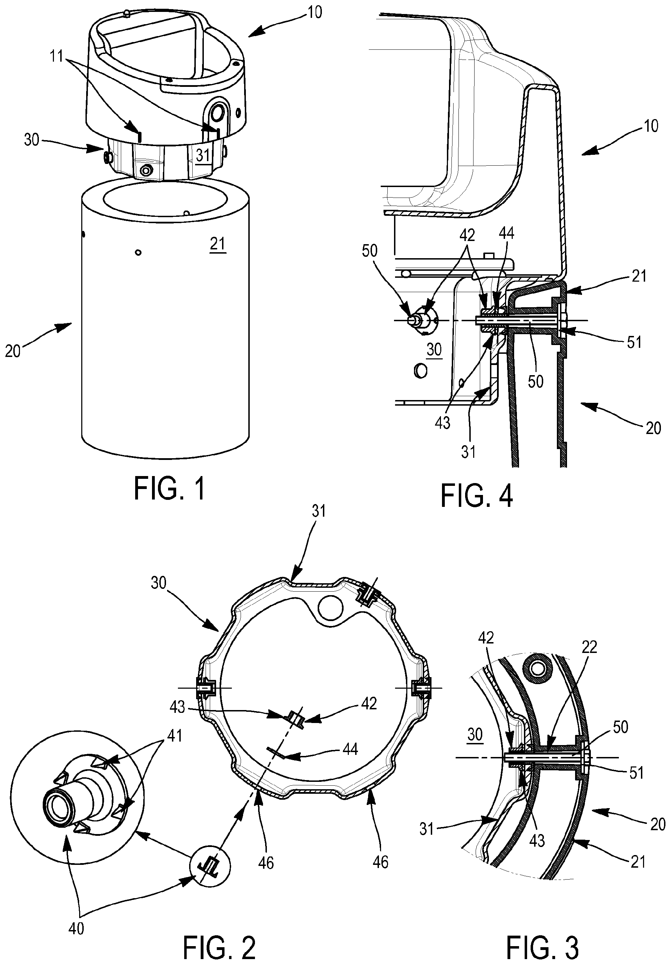

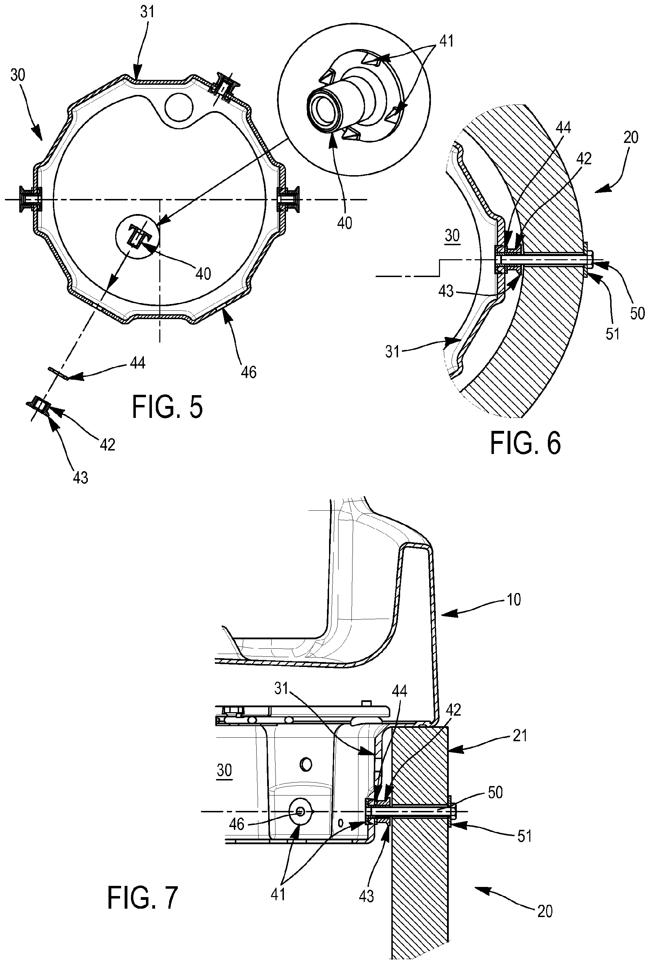

En référence à la figure 1, qui a pour vocation de montrer de manière globale la structure d'une installation selon l'invention, l'abreuvoir 10 proprement dit est monté sur une buse 20 au moyen d'une bride 30 qui est, dans l'hypothèse de l'invention, d'une seule pièce avec l'abreuvoir 10. Selon une possibilité, un tel abreuvoir 10 est en matériau synthétique moulé et, dans ce cas, la bride 30 vient de moulage avec l'abreuvoir 10, ce qui est éminemment favorable en termes économiques puisque la pièce devenue unique revient beaucoup moins chère à produire que dans les solutions de l'art antérieur à deux pièces distinctes. Un premier moule devait alors être conçu pour l'abreuvoir supérieur, puis deux moules - dans l'hypothèse de deux buses par exemple en polyéthylène et en béton - pour les brides, alors qu'un moule unique est à présent suffisant. La figure 1 représente une buse 20 en béton, sur laquelle l'unique forme d'abreuvoir 10 muni de sa bride 30 est fixée par le haut, selon des modalités qui seront plus précisément envisagées en référence aux figures 5 à 7.

La fixation de la même pièce unique 10-30 à une buse 20 en polyéthylène est montrée aux figures 2 à 4. Ainsi, la bride 30 est dans ce cas fixée à la buse 20 via des systèmes de fixation identiques placés sur la périphérie à la fois de la bride 30 et de la buse 20, à des emplacements montrés en figure 2. Ceux-ci ne sont pas régulièrement répartis sur la périphérie mais peuvent dépendre de paramètres additionnels notamment de praticité, par exemple la facilité d'accès aux points de fixation, dans l'objectif d'améliorer la commodité du montage. Dans les figures, l'assemblage est assuré par quatre systèmes de fixation, dont l'un est montré en représentation éclatée pour mieux en préciser la composition. Ces systèmes de fixation comportent en réalité d'une part des organes liés à la bride 30, en substance un premier écrou 40 (montré agrandi en figure 2) à griffes 41, un second écrou 42 à embase 43 et une rondelle 44. Ils présentent d'autre part des organes liées à la buse, en l'espèce une vis 50 et une rondelle 51 (voir en particulier en figures 3 et 4). Ces moyens de fixation coopèrent en formant un boulon permettant la fixation par boulonnage de la bride 30, et donc de l'abreuvoir 10, à la buse 20.

Lorsqu'ils sont assemblés, les organes liés à la bride 30 sont tels que le corps de l'écrou 40, comportant un filetage intérieur permettant le vissage de la vis 50, est orienté vers l'intérieur de la bride 30, comme le montre la figure 2, l'embase avec les griffes 41 étant alors disposée à l'extérieur de la cloison 31 cannelée de la bride 30. Le second écrou 42 et sa rondelle 44 sont placés à l'intérieur de la cloison 31 de la bride 30, l'embase 43 étant en appui sur la rondelle 44, c'est-à-dire vers la face interne de la cloison 31. Monté, cet écrou « complexe » est compact et présente un filetage utile (pour la vis 50) qui est rentrant.

Cet agencement est particulièrement bien adapté aux buses 20 en polyéthylène qui sont illustrées dans les figures 3 et 4, dont la paroi périphérique est creuse et qui présentent un diamètre intérieur inférieur à celui des buses en béton, par exemple, notamment pour des raisons de tenue et de résistance mécanique. Dans ce cas, les écrous 40 42, assemblés de part et d'autre d'orifices 46 percées dans une partie supérieure un peu plus large de la bride 30 (voir en figures 3 et 4), sont pratiquement en contact avec la face interne de la buse 20. Cela signifie en pratique que le filetage utile de cet écrou complexe, en l'espèce celui du premier écrou 40, est immédiatement dans la continuité du conduit 22 par lequel la vis 50 traverse la paroi 21 périphérique supérieure de la buse 20. On notera que les boulonnages sont réalisés au niveau des portions protubérantes de la cloison 31 situées entre les cannelures, portions qui sont les plus proches de la face interne des buses et définissent en l'occurrence le diamètre extérieur de la bride 30. Ces portions sont légèrement incurvées et permettent un centrage précis de la bride 30, et par conséquent de l'abreuvoir 10, par rapport à la buse 20. Des repères 11 sont par ailleurs placés à l'extérieur de la paroi de l'abreuvoir 10, permettant de faire coïncider les orifices 46 pratiqués dans la cloison 31 de la bride 30 et les conduits 22 traversant la paroi 21 de la buse 20.

La buse 20 est d'emblée fabriquée avec ses conduits 22 de passage des vis 50, mais la cloison 31 n'est pas percée des orifices 46 au moment du moulage. Il faut donc aligner l'embouchure extérieure desdits conduits 22 avec les repères 11, lorsque l'abreuvoir 10 est bien centré sur la buse 20, puis se servir de ces conduits 22 comme canon de perçage pour forer les orifices 46. Le diamètre des orifices 46 de la cloison 31 est ensuite le cas échéant ajusté par un perçage plus large.

Une fois les ensembles écrou 40/rondelle 44/écrou 42 montés de part et d'autre des orifices 46, et le positionnement relatif abreuvoir 10/ buse 20 effectué grâce aux repères 11, il suffit de visser les vis 50 après avoir positionné les rondelles 51. Les opérations de fixation à l'aide des quatre systèmes de fixation ainsi décrits sont simples et ne prennent que quelques minutes.

Cela n'est pas plus compliqué avec une buse en béton dont le diamètre intérieur est supérieur au précédent, les modalités de fixation ressortant des figures 5 à 7. Exactement les mêmes composants mécaniques que précédemment sont utilisés, qui bénéficient par conséquent des mêmes références numériques. Il y a cependant une différence de montage en ce que lorsqu'ils sont assemblés, les organes de fixation liés à la bride 30 sont tels que le corps de l'écrou 40, comportant un filetage intérieur permettant le vissage de la vis 50, est à présent orienté vers l'extérieur de la bride 30, comme le montre la figure 5. L'embase de l'écrou 40 dotée des griffes 41 est cette fois disposé à l'intérieur de la cloison 31 cannelée de la bride 30, alors que le second écrou 42 et sa rondelle 44 sont à présent placés à l'extérieur de la cloison 31. Dans ce cas, l'embase 43 est localisée à l'opposé de la rondelle 44, vers la face interne de la paroi 21 de la buse 20, en appui ou en tout cas au voisinage de ladite face interne. Monté, l'écrou « complexe » n'est plus aussi compact que dans l'assemblage précédent, prévu pour les buses en polyéthylène, et forme au contraire une sorte d'entretoise entre les faces respectivement externe de la cloison 31 et interne de la paroi supérieure 21 : le filetage « utile » (pour la vis 50) est à présent sortant, ce qui se comprend bien puisqu'il s'agit en quelque sorte de « rattraper » la différence entre les dimensions respectives des diamètre extérieur de la bride 30 et intérieur de la buse en béton 20. Les mêmes vis sont utilisées, et il n'est donc pas utile de s'encombrer de différents types de vis. A l'exception de la buse 20, le matériel utilisé dans les deux cas est rigoureusement le même, ce qui est clairement l'un des avantages de l'invention puisque l'opérateur n'a qu'à se munir du même kit en toute circonstance, sans être obligé de sélectionner des composants selon le type d'installation à monter, au risque de se tromper.

Dans le cas des buses en béton, les boulonnages prennent place dans une partie inférieure un peu moins large de la bride 30 (voir en figures 6 et 7) et sont toujours réalisés au niveau des portions protubérantes entre les cannelures de la cloison 31, qui définissent cette fois des méplats n'ayant plus de fonction de centrage. Outre les orifices 46 à pratiquer dans la cloison 31, il faut de plus dans ce cas perforer la paroi supérieure 21 de la buse 20 en béton pour réaliser les passages pour les vis 50. On utilise à nouveau les repères 11 lorsque l'abreuvoir 10 est bien centré sur la buse 20, puis on trace des marques au droit des repères 11 aux emplacements à perforer, à une distance prédéterminée du bord supérieur de la buse 20, avant de procéder au perçage de la paroi 21 de la buse 20 et, ensuite, de la cloison 31. Le diamètre des orifices 46 de la cloison 31 est ensuite le cas échéant ajusté dans le sens d'un élargissement, au moyen d'un foret de diamètre supérieur. Comme pour le montage déjà décrit en référence à des buses en polyéthylène, lorsque les ensembles écrou 40/rondelle 44/écrou 42 sont fixés de part et d'autre des orifices 46, il suffit de procéder au positionnement relatif abreuvoir 10/ buse 20 au moyen des repères 11, puis de visser les vis 50 après avoir positionné les rondelles 51.

Les opérations aboutissant au montage d'un abreuvoir sur une buse sont, dans tous les cas, aisées et rapides à réaliser, par exemple en se limitant à quatre emplacements de fixation répartis sur la périphérie de l'installation, au moyen de quatre systèmes de fixation selon l'invention.

Celle-ci ne se limite pas aux exemples décrits en référence aux figures, qui ne sont que des possibilités de mise en oeuvre non limitatives de l'invention, laquelle englobe également les variantes de configuration au niveau des boulonnages aussi bien que des matériaux non mentionnés pour les buses, dès lors qu'ils sont appropriés au montage d'une telle installation.

## Revendications

1. Installation à abreuvoir comportant une buse (20) implantée dans le sol et un abreuvoir (10) fixé au sommet de la buse (20) au moyen d'une bride (30) de fixation d'une seule pièce avec l'abreuvoir (10), insérable dans une ouverture supérieure de la buse (20), **caractérisée en ce que** qu'elle comporte une pluralité de systèmes de fixation de la bride (30) à la buse (20) répartis sur leur périphérie, chaque système présentant des premiers moyens de fixation (40, 42), liés à la bride (30) et des seconds moyens de fixation (50) liés à la buse (20), lesdits moyens (40, 42, 50) étant aptes à coopérer en vue de la fixation de l'une à l'autre, lesdits premiers moyens de fixation (40, 42) étant d'agencement réversible par rapport à une cloison (31) périphérique de la bride (30) insérée dans ladite ouverture et étant dimensionnés pour former, dans l'un de leur agencement par rapport à la cloison (31), entretoise entre la surface extérieure de ladite cloison (31) et la surface intérieure de la paroi (21) de l'ouverture de la buse (20).

2. Installation à abreuvoir selon la revendication précédente, **caractérisée en ce que** les premiers moyens de fixation comportent un premier écrou (40) coopérant avec des moyens de solidarisation (41) réversible à la cloison (31) de la bride (30) et sont localisés au niveau d'un orifice (46) pratiqué dans ladite cloison (31), ledit premier écrou (40) servant à la fixation d'une vis filetée (50) constituant les seconds moyens de fixation, traversant la paroi (21) de l'ouverture de la buse (20) selon un conduit (22) coaxial audit orifice (46) de la cloison (31).

3. Installation à abreuvoir selon la revendication précédente, **caractérisée en ce que** les moyens de solidarisation réversibles comportent un second écrou (42), les premier et second écrous (40, 42) étant placés de part et d'autre de l'orifice (46) pratiqué dans la cloison 31 de la bride (30), le premier écrou (40) comportant une base munie de griffes (41) de fixation dans une face de la cloison (31) de la bride (30) et un filetage externe apte à un vissage dans le filetage interne du second écrou (42), lequel s'appuie en phase de serrage contre l'autre face de la cloison (31).

4. Installation à abreuvoir selon la revendication précédente, **caractérisée en ce que** le second écrou (42) comporte une embase (43) et est positionné par rapport à la bride (30) avec ladite embase (43) en appui contre la face interne de la cloison (31) lorsqu'il est à l'intérieur de la bride (31), ou contre ou au voisinage de la face intérieure de la buse (20) lorsqu'il est à l'extérieur de la bride (30).

5. Installation à abreuvoir selon l'une des revendications précédentes, **caractérisée en ce que** la cloison (31) est divisée en deux zones de fixation périphériques, une première zone de fixation proximale de l'abreuvoir (10) et une seconde zone de fixation distale de l'abreuvoir (10), les systèmes de fixation de la bride (30) à la buse (20) étant placés exclusivement dans l'une des deux zones.

6. Installation à abreuvoir selon la revendication précédente, **caractérisée en ce que** les zones de fixations sont en forme de bandes périphériques dans lesquelles les systèmes de fixation sont disposés périphériquement au même niveau, la seconde zone étant en retrait de la première dans une direction d'allure radiale.

7. Installation à abreuvoir selon l'une des revendications précédentes, **caractérisée en ce que** la cloison (31) périphérique de la bride (30) présente un profil cannelé, les systèmes de fixation s'appliquant sur les portions protubérantes entre les cannelures.

8. Installation à abreuvoir selon la revendication précédente, **caractérisée en ce que** l'abreuvoir (10) comporte des repères (11) répartis sur sa périphérie et situés au voisinage du bord supérieur de la buse (20) lorsque la bride (30) est insérée dans la buse (20), lesdits repères 11 étant tracés au droit des milieux des portions protubérantes de la cloison (31) de la bride (30).

9. Procédé de fixation d'un abreuvoir (10) à une buse (20) implantée au sol dans une installation dans laquelle l'abreuvoir (10) est fixé à la buse au moyen d'une bride (30) d'une seule pièce avec l'abreuvoir (10) selon les revendications 2 à 10, **caractérisé par** :
- Mise en correspondance des repères (11) de l'abreuvoir avec des repères sur la face extérieure de la paroi (21) de la buse (20) en au moins une pluralité d'emplacements sélectionnés sur la périphérie de la buse (20) ;
- Réalisation de perçages au niveau desdits emplacements sur la périphérie de la buse (20), comportant le perçage de la cloison (31) de la bride (30) ;
- Si les diamètres respectivement externe de la bride (30) et interne de la buse (20) présentent un différentiel supérieur à un seuil prédéterminé, mise en place des premier et second écrous (40, 42) selon un agencement formant entretoise entre la cloison (31) et la buse (20) ;
- Sinon, mise en place inversée desdits premier et second écrous (40, 42) sans agencement en entretoise ;
- Mise en place des vis (50) dans les emplacements ayant fait l'objet d'un perçage ;
- Fixation de l'abreuvoir (10) sur la buse (20) au niveau de la bride (30) par serrage des vis 50 dans les écrous (40, 42) .

10. Procédé de fixation d'un abreuvoir (10) à une buse (20) en polyéthylène implantée au sol selon la revendication précédente, **caractérisé par** :
- Mise en correspondance des repères (11) de l'abreuvoir (10) avec les embouchures des conduits (22) apparaissant sur la face extérieure de la paroi (21) de la buse (20) ;
- Réalisation de perçages de la cloison (31) de la bride (30) en utilisant les conduits (22) comme canon de perçage aux emplacements sélectionnés ;
- mise en place des premier et second écrous (40, 42) selon un agencement compact comportant le premier écrou (40) orienté vers l'intérieur de la bride (30).

11. Procédé de fixation d'un abreuvoir (10) à une buse (20) en béton implantée au sol selon la revendication 11, **caractérisé par** :
- Mise en correspondance des repères (11) de l'abreuvoir avec des repères à tracer sur la face extérieure de la paroi (21) de la buse (20) aux emplacements sélectionnés, à une distance prédéterminée du bord supérieur de la buse (20) ;
- Réalisation de perçages à ces emplacements de la paroi (21) de la buse (20) et, ensuite, de la cloison (31) de la bride (30) ;
- mise en place des premier et second écrous (40, 42) selon un agencement en entretoise comportant le premier écrou (40) orienté vers l'extérieur de la bride (30).

12. Procédé de fixation d'un abreuvoir (10) à une buse (20) implantée au sol selon l'une des revendications 11 à 13, **caractérisé en ce que** les perçages de la cloison (31) de la bride (30) font l'objet d'un second perçage de diamètre supérieur puis d'un ébavurage.

## Patentansprüche

1. Anlage mit Tränke, umfassend eine Düse (20), die in den Boden implantiert ist, und eine Tränke (10), die auf den Scheitel der Düse (20) mit Hilfe eines einstückigen Befestigungsflansches (30) mit der Tränke (10) befestigt ist, der in eine obere Öffnung der Düse (20) eingeführt werden kann, **dadurch gekennzeichnet, dass** sie eine Vielzahl von Systemen zum Befestigen des Flansches (30) an die Düse (20) umfasst, die auf ihrem Umfang verteilt sind, wobei jedes System erste Befestigungsmittel (40, 42) aufweist, die mit dem Flansch (30) verbunden sind, und zweite Befestigungsmittel (50), die mit der Düse (20) verbunden sind, wobei die Mittel (40, 42, 50) ausgelegt sind, um für die Befestigung aneinander zusammenzuarbeiten, wobei die ersten Befestigungsmittel (40, 42) umkehrbar mit Bezug auf eine periphere Trennwand (31) des Flansches (30) angeordnet sind, der in die Öffnung eingeführt ist, und abgemessen ist, um in einer ihrer Anordnungen mit Bezug auf die Trennwand (31) einen Abstandhalter zwischen der äußeren Fläche und der Trennwand (31) und der unteren Fläche der Wand (21) der Öffnung der Düse (20) zu bilden.

2. Anlage mit Tränke nach dem vorhergehenden Anspruch, **dadurch gekennzeichnet, dass** die ersten Befestigungsmittel eine erste Schraubenmutter (40) umfassen, die mit Mitteln zur umkehrbaren Befestigung (41) an die Trennwand (31) des Flansches (30) zusammenarbeitet und sich auf dem Niveau eines Lochs (46) befinden, die in der Trennwand (31) durchgeführt sind, wobei die erste Schraubenmutter (40) zur Befestigung einer Gewindespindel (50) dient, die die zweiten Befestigungsmittel darstellt, die die Wand (21) der Öffnung der Düse (20) gemäß einem Kanal (22), der koaxial zu der Öffnung (46) der Trennwand (31) ist, queren.

3. Anlage mit Tränke nach dem vorhergehenden Anspruch, **dadurch gekennzeichnet, dass** die umkehrbaren Befestigungsmittel eine zweite Schraubenmutter (42) umfassen, wobei die erste und zweite Schraubenmutter (40, 42) auf beiden Seiten der Öffnung (46) platziert sind, die in der Trennwand 31 des Flansches (30) durchgeführt ist, wobei die erste Schraubenmutter (40) eine Basis umfasst, ausgestattet mit Krallen (41) zu Befestigung auf einer Seite der Trennwand (31) des Flansches (30), und einem Außengewinde, das für eine Verschraubung im Innengewinde der zweiten Schraubenmutter (42) ausgelegt ist, die in der Phase des Festziehens gegen die andere Seite der Trennwand (31) aufliegt.

4. Anlage mit Tränke nach dem vorhergehenden Anspruch, **dadurch gekennzeichnet, dass** die zweite Schraubenmutter (42) eine Basisplatte (43) umfasst und mit Bezug auf den Flansch (30) mit der Basisplatte (43) in Auflage gegen die innere Seite der Trennwand (31) positioniert ist, wenn sie sich im Inneren des Flansches (31) befindet, oder gegen oder in der Nähe der Innenseite der Düse (20), wenn sie sich außerhalb des Flansches (30) befindet.

5. Anlage mit Tränke nach einem der vorhergehenden Ansprüche, **dadurch gekennzeichnet, dass** die Trennwand (31) in zwei periphere Befestigungsbereiche unterteilt ist, einen ersten Befestigungsbereich proximal zur Tränke (10) und einen zweiten Befestigungsbereich distal zur Tränke (10), wobei die Systeme zur Befestigung des Flansches (30) an die Düse (20) ausschließlich in einem der zwei Bereiche platziert sind.

6. Anlage mit Tränke nach dem vorhergehenden Anspruch, **dadurch gekennzeichnet, dass** die Befestigungsbereiche die Form von peripheren Bändern aufweisen, in denen sich die Befestigungssysteme peripher auf dem gleichen Niveau befinden, wobei der zweite Bereich vom ersten in einer Richtung mit radialem Verlauf zurückversetzt ist.

7. Anlage mit Tränke nach einem der vorhergehenden Ansprüche, **dadurch gekennzeichnet, dass** periphere Trennwand (31) des Flansches (30) ein geripptes Profil aufweist, wobei die Befestigungssysteme auf die vorstehenden Abschnitte zwischen den Rippen angewendet werden.

8. Anlage mit Tränke nach einem der vorhergehenden Ansprüche, **dadurch gekennzeichnet, dass** die Tränke (10) Markierungen (11) umfasst, die auf ihrem Umfang verteilt sind und sich in der Nähe des oberen Rands der Düse (20) befinden, wenn der Flansch (30) in die Düse (20) eingeführt ist, wobei die Markierungen (11) rechts von den Mitten der vorstehenden Abschnitte der Trennwand (31) des Flansches (30) angebracht sind.

9. Verfahren zur Befestigung einer Tränke (10) an eine Düse (20), die in den Boden in einer Anlage installiert ist, wobei die Tränke (10) an die Düse mit Hilfe eines einstückigen Flansches (30) mit der Tränke (10) nach einem der Ansprüche 2 bis 10 befestigt ist, **gekennzeichnet durch**:
- Zuordnen der Markierungen (11) der Tränke zu den Markierungen auf der Außenseite der Wand (21) der Düse an mindestens einer Vielzahl von Stellen, ausgewählt auf dem Umfang der Düse (20);
- Durchführen von Bohrungen auf dem Niveau der Stellen auf dem Umfang der Düse (20), umfassend die Bohrung der Trennwand (31) des Flansches (30);
- wenn der jeweils äußere Durchmesser des Flansches (30) und innere Durchmesser der Düse (20) eine Differenz von mehr als einem vorbestimmten Schwellenwert aufweisen, Anbringen der ersten und zweiten Schraubenmutter (40, 42) gemäß einer Anordnung, die einen Abstandhalter zwischen der Trennwand (31) und der Düse (20) bildet;
- Andernfalls umgekehrtes Anbringen der ersten und zweiten Schraubenmutter (40, 42) ohne Anordnung im Abstandhalter;
- Anbringen der Schrauben (50) an den Stellen, an denen eine Bohrung durchgeführt wurde;
- Befestigen der Tränke (10) auf der Düse (20) auf dem Niveau des Flansches (30) durch Festziehen der Schrauben 50 in den Schraubenmuttern (40, 42).

10. Verfahren zur Befestigung einer Tränke (10) an einer Düse (20) aus Polyethylen, die in den Boden implantiert ist, gemäß dem vorhergehenden Anspruch, **gekennzeichnet durch**
- Zuordnen der Markierungen (11) der Tränke (10) zu den Mündungen der Kanäle (22), die auf der Außenseite der Wand (21) der Düse (20) erscheinen;
- Durchführen von Bohrungen der Trennwand (31) des Flansches (30) unter Verwendung der Kanäle (22) als Bohrbuchse an den ausgewählten Stellen;
- Anbringen der ersten und zweiten Schraubenmutter (40, 42) gemäß einer kompakten Stelle, umfassend die erste Schraubenmutter (40), die hin zum Inneren des Flansches (30) ausgerichtet ist.

11. Verfahren zur Befestigung einer Tränke (10) an eine Düse (20) aus Beton, die in den Boden implantiert ist, nach Anspruch 11, **gekennzeichnet durch**:
- Zuordnen der Markierungen (11) der Tränke zu den Markierungen, die auf der Außenseite der Wand (21) der Düse (20) mit den ausgewählten Stellen in einem vorbestimmten Abstand des oberen Rands der Düse (20) angebracht werden sollen;
- Durchführen von Bohrungen an diesen Stellen der Wand (21) der Düse (20) und dann der Trennwand (31) des Flansches (30);
- Anbringen der ersten und zweiten Schraubenmutter (40, 42) gemäß einer Stelle im Abstandhalter, umfassend die erste Schraubenmutter (40), die hin zum Äußeren des Flansches (30) ausgerichtet ist.

12. Verfahren zur Befestigung einer Tränke (10) an eine Düse (20), die in den Boden implantiert ist, nach einem der Ansprüche 11 bis 13, **dadurch gekennzeichnet, dass** die Bohrungen der Trennwand (31) des Flansches (30) Gegenstand einer zweiten Bohrung mit einem größeren Durchmesser, dann eines Entgraten, sind.

## Claims

1. A drinking trough system including a nozzle (20) installed in the ground and a drinking trough (10) fastened to the apex of the nozzle (20) using a fastening flange (30) in a single piece with the drinking trough (10), able to be inserted into an upper opening of the nozzle (20), **characterized in that** it includes a plurality of systems for fastening the flange (30) to the nozzle (20) distributed on their periphery, each system having first fastening means (40, 42), connected to the flange (30), and second fastening means (50) connected to the nozzle (20), said means (40, 42, 50) being able to cooperate for the fastening of one to the other, said first fastening means (40, 42) having a reversible arrangement relative to a peripheral partition (31) of the flange (30) inserted into said opening and being sized in order to form, in one of their arrangement relative to the partition (31), a spacer between the outer surface of said partition (31) and the inner surface of the wall (21) of the opening of the nozzle (20).

2. The drinking trough system according to the preceding claim, **characterized in that** the first fastening means include a first nut (40) cooperating with means (41) for reversible securing to the partition (31) of the flange (30) and are located at an orifice (46) formed in said partition (31), said first nut (40) being used to fasten a threaded screw (50) making up the second fastening means, passing through the wall (21) of the opening of the nozzle (20) along a duct (22) coaxial to said orifice (46) of the partition (31).

3. The drinking trough system according to the preceding claim, **characterized in that** the reversible securing means include a second nut (42), the first and second nuts (40, 42) being placed on either side of the orifice (46) formed in the partition (31) of the flange (30), the first nut (40) including a base provided with prongs (41) for fastening in a face of the partition (31) of the flange (30) and an outer thread suitable for screwing in the inner thread of the second nut (42), which bears in the tightening phase against the other face of the partition (31).

4. The drinking trough system according to the preceding claim, **characterized in that** the second nut (42) includes a base (43) and is positioned relative to the flange (30) with said base (43) bearing against the inner face of the partition (31) when it is inside the flange (31), or against or near the inner face of the nozzle (20) when it is outside the flange (30).

5. The drinking trough system according to one of the preceding claims, **characterized in that** the partition (31) is divided into two peripheral fastening zones, a first proximal fastening zone of the drinking trough (10) and a second distal fastening zone of the drinking trough (10), the fastening systems of the flange (30) to the nozzle (20) being placed exclusively in one of the two zones.

6. The drinking trough system according to the preceding claim, **characterized in that** the fastening zones are in the form of peripheral bands in which the fastening systems are arranged peripherally at the same level, the second zone being withdrawn from the first in a radial direction.

7. The drinking trough system according to one of the preceding claims, **characterized in that** the peripheral partition (31) of the flange (30) has a cannulated profile, the fastening systems being pressed on the protruding portions between the cannulations.

8. The drinking trough system according to the preceding claim, **characterized in that** the drinking trough (10) includes reference marks (11) distributed over its periphery and located near the upper edge of the nozzle (20) when the flange (30) is inserted into the nozzle (20), said reference marks (11) being drawn in line with the middles of the protruding portions of the partition (31) of the flange (30).

9. A method for fastening a drinking trough (10) to a nozzle (20) installed in the ground in a system in which the drinking trough (10) is fastened to the nozzle using a flange (30) in one piece with the drinking trough (10) according to claims 2 to 10, **characterized by**:
- Matching up the reference marks (11) of the drinking trough with the reference marks on the outer face of the wall (21) of the nozzle (20) in at least a plurality of selected locations on the periphery of the nozzle (20);
- Making piercings at said locations on the periphery of the nozzle (20), including piercing the partition (31) of the flange (30);
- If the respective outer diameter of the flange (30) and inner diameter of the nozzle (20) have a differential greater than a predetermined threshold, placing first and second nuts (40, 42) according to an arrangement forming a spacer between the partition (31) and the nozzle (20);
- Otherwise, performing a reverse placement of said first and second nuts (40, 42) without arrangement in a spacer;
- Placing screws (50) in the pierced locations;
- Fastening the drinking trough (10) on the nozzle (20) at the flange (30) by tightening the screws (50) in the nuts (40, 42).

10. A method for fastening a drinking trough (10) to a polyethylene nozzle (20) installed in the ground according to the preceding claim, **characterized by**:
- Matching up reference marks (11) of the drinking trough (10) with the mouths of the ducts (22) appearing on the outer face of the wall (21) of the nozzle (20);
- Piercing the partition (31) of the flange (30) using the ducts (22) as drill bush in the selected locations;
- Placing the first and second nuts (40, 42) in a compact arrangement including the first nut (40) oriented toward the inside of the flange (30).

11. The method for fastening a drinking trough (10) to a concrete nozzle (20) installed in the ground according to claim 11, **characterized by**:
- Matching up reference marks (11) of the drinking trough with reference marks to be made on the outer face of the wall (21) of the nozzle (20) in the selected locations, at a predetermined distance from the upper edge of the nozzle (20);
- Piercing these locations of the wall (21) of the nozzle (20) and, next, of the partition (31) of the flange (30);
- Placing first and second nuts (40, 42) in a spacer arrangement including the first nut (40) oriented toward the outside of the flange (30).

12. The method for fastening a drinking trough (10) to a nozzle (20) installed in the ground according to one of claims 11 to 13, **characterized in that** the piercings of the partition (31) of the nozzle (30) are subject to a second piercing of greater diameter, then a deburring.
